# EUROPEAN PATENT APPLICATION

(11) **EP 4 566 915 A1**
(43) Date of publication of application: **11.06.2025**
(21) Application number: 23872024.7
(22) Date of filing: 19.09.2023
(51) Int. Cl.: B62D 1/12, B62D 12/00

(54) **STEERING DEVICE AND WORK VEHICLE**

(30) Priority: 29.09.2022 JP 2022156373
(71) Applicant: Komatsu Ltd., Minato-ku Tokyo 107-8414 (JP)
(72) Inventor: KATO, Yasunari, Tokyo 107-8414 (JP); TAKENAKA, Yuita, Tokyo 107-8414 (JP); TERANISHI, Yuichi, Tokyo 107-8414 (JP)
(74) Representative: Grünecker Patent- und Rechtsanwälte PartG mbB
(86) International application number: PCT/JP2023/033850
(87) International publication number: WO 2024/070796

(57) **Abstract**

A rod (45c) is pivotably connected to a front frame (2a) with a bracket (45a) being interposed. A link member (45e) is pivotably connected to the rod (45c) at a first end (45e1) and has a rotation shaft (45f) at a second end (45e2). A transmission member (TM) transmits rotational force to a base member (43) while a direction of rotation of the rotation shaft (45f) in rotation of the link member (45e) is maintained. In a top view, when the front frame (2a) rotates in a first direction by articulation with respect to a rear frame (2b), the link member (45e) rotates in a second direction which is a direction reverse to the first direction.

## Description

### TECHNICAL FIELD

The present disclosure relates to a steering apparatus and a work vehicle.

### BACKGROUND ART

Japanese Patent Laying-Open No. 2020-26230 (PTL 1) and Japanese Patent Laying-Open No. 2020-26233 (PTL 2) each disclose a steering apparatus in an articulated work vehicle in which a front frame and a rear frame are coupled to each other. In the steering apparatus, rotation based on a pivot angle of the front frame with respect to the rear frame is transmitted to a base member as being converted to rotation in a reverse direction by a reversing gear.

### CITATION LIST

### PATENT LITERATURE

PTL 1: Japanese Patent Laying-Open No. 2020-26230
PTL 2: Japanese Patent Laying-Open No. 2020-26233

### SUMMARY OF INVENTION

### TECHNICAL PROBLEM

In the steering apparatus described in these publications, the reversing gear is provided in a lever unit. Backlash in this reversing gear causes a large play at a neutral position of a control lever and results in difficulty in operation of a work vehicle.

An object of the present disclosure is to provide a steering apparatus and a work vehicle that are readily operated.

### SOLUTION TO PROBLEM

A steering apparatus in the present disclosure is a steering apparatus of a work vehicle including a rear frame and a front frame connected as being articulated with respect to the rear frame. This steering apparatus includes a lever unit, a rod, a link member, and a transmission member. The lever unit includes a base member. The rod is pivotably connected to the front frame. The link member has a first end and a second end, is pivotably connected to the rod at the first end, and has a rotation shaft at the second end. The transmission member transmits rotational force to the base member while a direction of rotation of the rotation shaft in rotation of the link member is maintained. The link member is configured to rotate, when the front frame rotates in a first direction by articulation with respect to the rear frame in a top view, in a second direction around the rotation shaft, the second direction being a direction reverse to the first direction.

A work vehicle in the present disclosure includes a rear frame, a front frame, a lever unit, a rod, a link member, and a transmission member. The front frame is connected as being articulated with respect to the rear frame. The lever unit includes a base member. The rod is pivotably connected to the front frame. The link member has a first end and a second end, is pivotably connected to the rod at the first end, and has a rotation shaft at the second end. The transmission member transmits rotational force to the base member while a direction of rotation of the rotation shaft in rotation of the link member is maintained. The link member is configured to rotate, when the front frame rotates in a first direction by articulation with respect to the rear frame in a top view, in a second direction around the rotation shaft, the second direction being a direction reverse to the first direction.

### ADVANTAGEOUS EFFECTS OF INVENTION

According to the present disclosure, the steering apparatus and the work vehicle that are readily operated can be realized.

### BRIEF DESCRIPTION OF DRAWINGS

Fig. 1 is a side view of a wheel loader as an exemplary work vehicle.
Fig. 2 is a diagram showing a construction in a cab in the wheel loader shown in Fig. 1.
Fig. 3 is a diagram showing a steering system in the wheel loader shown in Fig. 1.
Fig. 4 is a perspective view showing a construction of a transmission mechanism that transmits information on an actual vehicular body frame angle θs_real to a base member of a lever unit.
Fig. 5 is a side view (A) and a top view (B) showing the construction of the transmission mechanism shown in Fig. 4.
Fig. 6 is a top view showing a construction of a modification of the transmission mechanism.
Fig. 7 is a diagram (A) to (F) showing an operation of the steering apparatus and a state of a vehicular body frame in the wheel loader shown in Fig. 1.
Fig. 8 is a side view showing a state in which the lever unit is lifted.

### DESCRIPTION OF EMBODIMENTS

An embodiment of the present disclosure will be described below with reference to the drawings.

In the specification and the drawings, the same or corresponding constituent elements have the same reference characters allotted and redundant description will not be repeated. In the drawings, for the sake of convenience of description, a construction may be omitted or simplified. The embodiment and a modification may at least partially freely be combined.

### <Overall Construction of Wheel Loader 1>

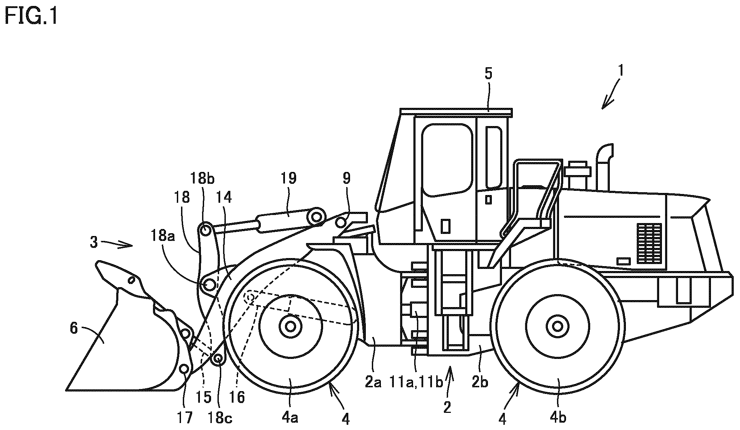

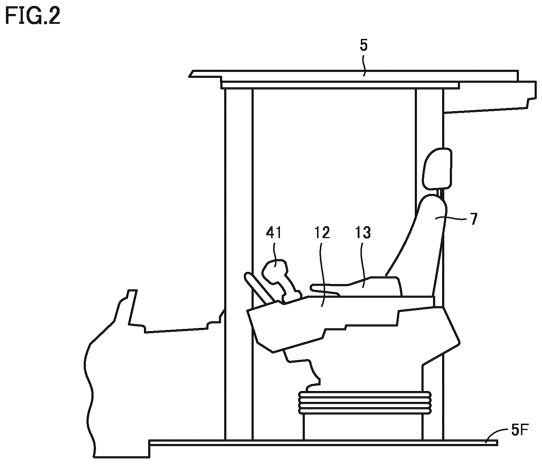

In an embodiment, a wheel loader 1 as an exemplary work machine will be described. Fig. 1 is a side view of the wheel loader as an exemplary work machine. Fig. 2 is a diagram showing a construction in a cab in the wheel loader shown in Fig. 1.

As shown in Fig. 1, wheel loader 1 includes a vehicular body frame 2, a work implement 3, a travel apparatus 4, and a cab 5. A vehicular body of wheel loader 1 is composed of vehicular body frame 2, cab 5, and the like. Work implement 3 and travel apparatus 4 are attached to the vehicular body of wheel loader 1. A main body of wheel loader 1 includes the vehicular body and travel apparatus 4.

Travel apparatus 4 serves for travel of the vehicular body of wheel loader 1 and includes running wheels 4a and 4b. Wheel loader 1 is a wheel-equipped vehicle provided with running wheels 4a and 4b as rotational elements for travel, on opposing sides in a lateral direction of the vehicular body. Wheel loader 1 is self-propelled as running wheels 4a and 4b are rotationally driven and can perform desired works with work implement 3.

A direction in which wheel loader 1 travels straight is herein referred to as a fore/aft direction of wheel loader 1. In the fore/aft direction of wheel loader 1, a side where work implement 3 is arranged with respect to vehicular body frame 2 is defined as the fore direction and a side opposite to the fore direction is defined as the aft direction. The lateral direction of wheel loader 1 refers to a direction orthogonal to the fore/aft direction when wheel loader 1 on a flat ground is viewed in a plan view. A right side and a left side in the lateral direction when one faces the fore direction are defined as a right direction and a left direction, respectively. An upward/downward direction of wheel loader 1 is a direction orthogonal to the plane defined by the fore/aft direction and the lateral direction. A side where the ground is located and a side where the sky is located in the upward/downward direction are defined as a lower side and an upper side, respectively.

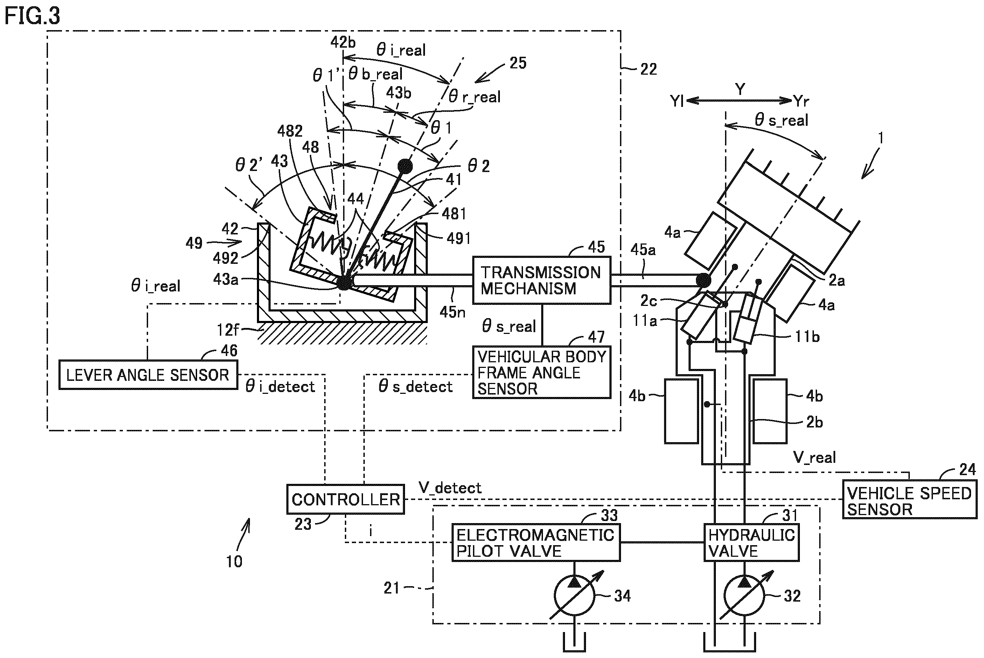

Vehicular body frame 2 includes a front frame 2a and a rear frame 2b. Front frame 2a is arranged in front of rear frame 2b. Front frame 2a and rear frame 2b are coupled to each other by a coupling shaft 2c (Fig. 3) as being laterally pivotable (being articulated).

A pair of steering cylinders 11a and 11b is attached across front frame 2a and rear frame 2b. Each of steering cylinders 11a and 11b is a hydraulic cylinder. As steering cylinders 11a and 11b extend and contract with hydraulic oil from a steering pump, a direction of travel of wheel loader 1 laterally changes.

Vehicular body frame 2 in an articulated structure is composed of front frame 2a and rear frame 2b. Wheel loader 1 is an articulated work machine in which front frame 2a and rear frame 2b are coupled to allow a flection operation.

Work implement 3 and a pair of running wheels (front wheels) 4a are attached to front frame 2a. Work implement 3 is attached in front of the main body of wheel loader 1. Work implement 3 is supported by the vehicular body of wheel loader 1. Work implement 3 includes a boom 14 and a bucket 6. Bucket 6 is arranged at a tip end of work implement 3. Bucket 6 is a work tool for excavation and loading.

Boom 14 has a base end portion rotatably attached to front frame 2a by a boom pin 9. Bucket 6 is rotatably attached to boom 14 by a bucket pin 17 located at a tip end of boom 14.

Work implement 3 further includes a bell crank 18 and a link 15. Bell crank 18 is rotatably supported on boom 14 by a support pin 18a located substantially in a center of boom 14. Link 15 is coupled to a coupling pin 18c provided at a tip end portion of bell crank 18. Link 15 couples bell crank 18 and bucket 6 to each other.

Front frame 2a and boom 14 are coupled to each other by a pair of boom cylinders 16. Boom cylinder 16 is a hydraulic cylinder. Boom cylinder 16 rotationally drives boom 14 upward and downward around boom pin 9. Boom cylinder 16 has a base end attached to front frame 2a. Boom cylinder 16 has a tip end attached to boom 14.

A bucket cylinder 19 couples bell crank 18 and front frame 2a to each other. Bucket cylinder 19 has a base end attached to front frame 2a. Bucket cylinder 19 has a tip end attached to a coupling pin 18b provided at a base end portion of bell crank 18. Bucket cylinder 19 is a hydraulic actuator to cause bucket 6 to pivot upward and downward with respect to boom 14.

Cab 5 on which an operator rides and a pair of running wheels (rear wheels) 4b are attached to rear frame 2b. Cab 5 in a box shape is arranged in the rear of boom 14. Cab 5 is carried on vehicular body frame 2. Cab 5 is carried on rear frame 2b.

As shown in Fig. 2, in cab 5, an operator's seat 7 where the operator of wheel loader 1 is seated is arranged. On a lateral side of operator's seat 7, a control lever 41, a console box 12, and an armrest 13 are arranged.

Control lever 41 is, for example, a control lever for a steering operation, and it is operated by the operator. Control lever 41 is arranged to extend upward from a front tip end portion of console box 12.

Armrest 13 is a portion on which the operator who sits in operator's seat 7 places his/her elbow. Armrest 13 is arranged in the rear of control lever 41 on console box 12. With this arrangement, the operator who sits in operator's seat 7 can grip and operate control lever 41 with his/her left hand, for example, with his/her left elbow being placed on armrest 13.

### <Steering System 10>

A steering system 10 in the wheel loader shown in Fig. 1 will now be described with reference to Fig. 3.

Fig. 3 is a diagram showing the steering system in the wheel loader shown in Fig. 1. As shown in Fig. 3, steering system 10 in the present embodiment includes a regulation mechanism 21, a steering apparatus 22, a controller 23, and a vehicle speed sensor 24.

Regulation mechanism 21 regulates output for drive of steering cylinders 11a and 11b. Steering apparatus 22 includes control lever 41 and the like, and receives input of a pivot instruction angle for steering of wheel loader 1 from the operator. Controller 23 instructs regulation mechanism 21 to regulate output for drive of steering cylinders 11a and 11b based on the pivot instruction angle for steering inputted to steering apparatus 22. Vehicle speed sensor 24 detects a vehicle speed V of wheel loader 1 and transmits the vehicle speed as a detection signal to controller 23.

Fig. 3 shows transmission of an electrical signal with a dotted line and shows transmission based on a hydraulic pressure with a solid line. Detection by a sensor is shown with a chain double-dotted line.

### (Regulation Mechanism 21)

As shown in Fig. 3, regulation mechanism 21 regulates a flow rate of oil to be supplied to steering cylinders 11a and 11b. Regulation mechanism 21 includes a hydraulic valve 31, a main pump 32, an electromagnetic pilot valve 33, and a pilot pump 34.

Hydraulic valve 31 is a flow rate regulation valve that regulates a flow rate of oil to be supplied to steering cylinders 11a and 11b in accordance with an inputted pilot pressure. For example, a spool valve is employed as hydraulic valve 31. Main pump 32 supplies hydraulic oil for activation of steering cylinders 11a and 11b to hydraulic valve 31.

Hydraulic valve 31 includes a valve element (not shown) movable to a left steering position, a neutral position, and a right steering position. When the valve element is arranged at the left steering position in hydraulic valve 31, steering cylinder 11a contracts and steering cylinder 11b extends so that an actual vehicular body frame angle θs_real decreases and the vehicular body turns to the left.

When the valve element is arranged at the right steering position in hydraulic valve 31, steering cylinder 11b contracts and steering cylinder 11a extends so that actual vehicular body frame angle θs_real increases and the vehicular body turns to the right. When the valve element is arranged at the neutral position in hydraulic valve 31, actual vehicular body frame angle θs_real does not change.

Actual vehicular body frame angle θs_real is 0 (zero)° when wheel loader 1 travels straight, it has a positive value when the wheel loader travels to the right, and it has a negative value when the wheel loader travels to the left.

Electromagnetic pilot valve 33 is a flow rate regulation valve that regulates a flow rate or a pressure of pilot oil to be supplied to hydraulic valve 31 in accordance with a command from controller 23. Pilot pump 34 supplies hydraulic oil for activation of hydraulic valve 31 to electromagnetic pilot valve 33. Electromagnetic pilot valve 33 is, for example, a spool valve or the like, and controlled in accordance with a command from controller 23.

Electromagnetic pilot valve 33 includes a valve element (not shown) movable to a left pilot position, a neutral position, and a right pilot position. When the valve element is arranged at the left pilot position in electromagnetic pilot valve 33, hydraulic valve 31 is in a state of the left steering position. When the valve element is arranged at the right pilot position in electromagnetic pilot valve 33, hydraulic valve 31 is in a state of the right steering position. When the valve element is arranged at the neutral position in electromagnetic pilot valve 33, hydraulic valve 31 is in a state of the neutral position.

As the pilot pressure or the pilot flow rate from electromagnetic pilot valve 33 is controlled in accordance with the command from controller 23 as set forth above, hydraulic valve 31 is controlled and steering cylinders 11a and 11b are controlled.

### (Controller 23)

As shown in Fig. 3, controller 23 includes a processor, a memory, and the like (not shown). Processing or the like below is performed by the processor.

Controller 23 receives input of a detection value θi_detect from a lever angle sensor 46, a detection value θs_detect from a vehicular body frame angle sensor 47, and a vehicle speed V_detect detected by vehicle speed sensor 24. Controller 23 outputs electromagnetic pilot valve control current output i based on these values to control electromagnetic pilot valve 33.

Controller 23 determines electromagnetic pilot valve control current output i based on detection value θi_detect representing the detected lever angle, detection value θs_detect of the vehicular body frame angle, and a detection signal V_detect from vehicle speed sensor 24. Controller 23 provides a command to electromagnetic pilot valve 33 based on determined electromagnetic pilot valve control current output i.

### (Steering Apparatus 22)

As shown in Fig. 3, steering apparatus 22 includes a lever unit 25, a transmission mechanism 45, lever angle sensor 46, and vehicular body frame angle sensor 47.

### [Lever Unit 25]

Lever unit 25 includes control lever 41, a support portion 42, a base member 43, a biasing member 44, and a restriction portion 48.

Support portion 42 is fixed to a frame 12f of console box 12. Support portion 42 may be a part of the frame of console box 12.

Base member 43 is pivotably supported on support portion 42. Base member 43 includes a shaft 43a. Shaft 43a is pivotably supported on support portion 42. Base member 43 can thus pivot around shaft 43a with respect to support portion 42. With such a construction that support portion 42 includes a shaft, a through hole is provided in base member 43, and the shaft of support portion 42 is inserted through the through hole in base member 43 as well, base member 43 can be constructed as being pivotable with respect to support portion 42.

Control lever 41 is arranged as being pivotable with respect to base member 43 or support portion 42. Control lever 41 is constructed as being pivotable with respect to base member 43, for example, by provision of the through hole in a base end portion thereof and insertion of shaft 43a in the through hole. Alternatively, control lever 41 can be constructed as being pivotable with respect to support portion 42 by provision of a shaft in support portion 42 and insertion of the shaft through a through hole in the base end portion of control lever 41.

Biasing member 44 is, for example, a spring member, and interposed between control lever 41 and base member 43. Biasing member 44 biases control lever 41 against base member 43 toward a base reference position 43b. Control lever 41 provides reaction force in both of a case of pivot from base reference position 43b to the right and a case of pivot from base reference position 43b to the left. While the operator does not grip control lever 41, control lever 41 is located at base reference position 43b owing to biasing force from left and right pivot directions.

Restriction portion 48 is provided in base member 43. Restriction portion 48 includes abutment parts 481 and 482. Abutment parts 481 and 482 restrict a range of pivot of control lever 41 with respect to base member 43 to be within a prescribed angular range. A state in which a longitudinal direction of control lever 41 is arranged at base reference position 43b is defined as a state in which a pivot angle of control lever 41 with respect to base member 43 is zero. When control lever 41 is pivoted to the right with respect to base member 43, the pivot angle of control lever 41 with respect to base member 43 is expressed with a positive angle. When control lever 41 is pivoted to the left with respect to base member 43, the pivot angle of control lever 41 with respect to base member 43 is expressed with a negative angle. An actual angle of control lever 41 relative to base member 43 is expressed as θr_real.

When control lever 41 is pivoted to the right Yr with respect to base member 43 and actual angle θr_real of control lever 41 relative to base member 43 reaches θ1 (a positive value), control lever 41 abuts on abutment part 481 of base member 43 and is unable to pivot to the right any more. Alternatively, when control lever 41 is pivoted to the left Yl with respect to base member 43 and relative angle θr_real reaches θ1' (a negative value), control lever 41 abuts on abutment part 482 of base member 43 and is unable to pivot to the left any more. In other words, control lever 41 is set to be pivotable within a range of angles from θ1' to θ1 with respect to base member 43. Prescribed angles θ1' and θ1 are set, for example, to -10 degrees and 10 degrees, respectively. An absolute value of prescribed angle θ1 and an absolute value of prescribed angle θ1' may be equal to or different from each other.

Furthermore, control lever 41 is restricted also by support portion 42 in addition to base member 43. Support portion 42 includes an abutment part 49 on which control lever 41 abuts. Abutment part 49 includes a right abutment portion 491 and a left abutment portion 492. Support portion 42 restricts base member 43 within a range of prescribed angles from θ2' (a negative value) to θ2 (a positive value) with respect to a support reference position 42b. Values of prescribed angles θ2' and θ2 are set, for example, to -20 degrees and 20 degrees, respectively. An absolute value of prescribed angle θ2 and an absolute value of prescribed angle θ2' may be equal to or different from each other.

Transmission mechanism 45 connects front frame 2a and base member 43 to each other. Thus, information on actual vehicular body frame angle θs_real which is the pivot angle of front frame 2a with respect to rear frame 2b is mechanically inputted to base member 43, with transmission mechanism 45 being interposed. The pivot angle based on actual vehicular body frame angle θs_real is thus transmitted to base member 43.

### [Lever Angle Sensor 46]

Lever angle sensor 46 is implemented, for example, by a potentiometer. Lever angle sensor 46 detects an actual lever angle θi_real of control lever 41 with respect to support portion 42 as lever angle detection value θi_detect.

While the longitudinal direction of control lever 41 is maintained at support reference position 42b, regulation mechanism 21 controls actual vehicular body frame angle θs_real to 0°. In this state, front frame 2a is in a state in which it is arranged along the fore/aft direction with respect to rear frame 2b.

The state in which control lever 41 is arranged at support reference position 42b is defined as a state in which the pivot angle of control lever 41 with respect to support portion 42 is zero. When control lever 41 is pivoted to the right with respect to support portion 42, the pivot angle of control lever 41 with respect to support portion 42 is expressed as a positive angle. When control lever 41 is pivoted to the left with respect to support portion 42, the pivot angle of control lever 41 with respect to support portion 42 is expressed as a negative angle.

Controller 23 carries out control such that actual vehicular body frame angle θs_real corresponds to actual lever angle θi_real from support reference position 42b of control lever 41. An actual base angle of base member 43 with respect to support portion 42 is expressed as θb_real. Actual base angle θb_real corresponds to the pivot angle of base reference position 43b of base member 43 from support reference position 42b.

A state in which base reference position 43b is arranged at support reference position 42b is defined as a state in which the pivot angle of base member 43 with respect to support portion 42 is zero. When base member 43 is pivoted to the right with respect to support portion 42, the pivot angle of base member 43 with respect to support portion 42 is expressed as a positive angle. When base member 43 is pivoted to the left with respect to support portion 42, the pivot angle of base member 43 with respect to support portion 42 is expressed as a negative angle.

### [Vehicular Body Frame Angle Sensor 47]

Vehicular body frame angle sensor 47 detects actual vehicular body frame angle θs_real as vehicular body frame angle detection value θs_detect. Vehicular body frame angle sensor 47 is arranged in the vicinity of coupling shaft 2c arranged between steering cylinders 11a and 11b or in a base member shaft 45n of base member 43 included in transmission mechanism 45 which will be described later. Vehicular body frame angle sensor 47 is implemented, for example, by a potentiometer. Vehicular body frame angle sensor 47 sends detection value θs_detect representing the detected vehicular body frame angle as a detection signal to controller 23.

Each of steering cylinders 11a and 11b may be provided with a cylinder stroke sensor that detects a stroke of the cylinder. As detection values from these cylinder stroke sensors are sent to controller 23, vehicular body frame angle detection value θs_detect may be detected.

With transmission mechanism 45 which will be described later, vehicular body frame angle θs_real and base angle θb_real which is the pivot angle of base member 43 with respect to support portion 42 are in corresponding positional relation. Therefore, vehicular body frame angle sensor 47 may be provided in shaft 43a of base member 43, because the vehicular body frame angle can be detected by detection of the pivot angle of base member 43 with respect to support portion 42.

### [Transmission Mechanism 45]

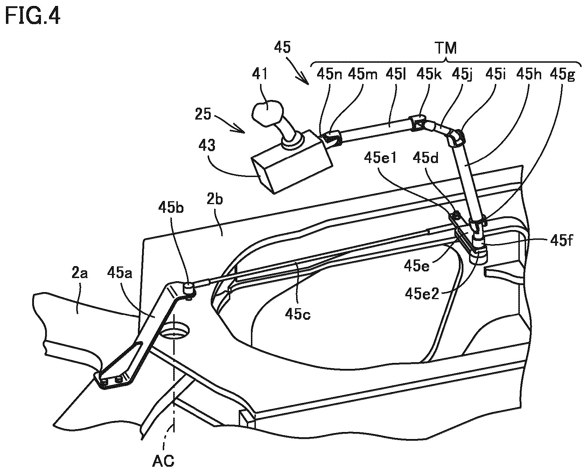

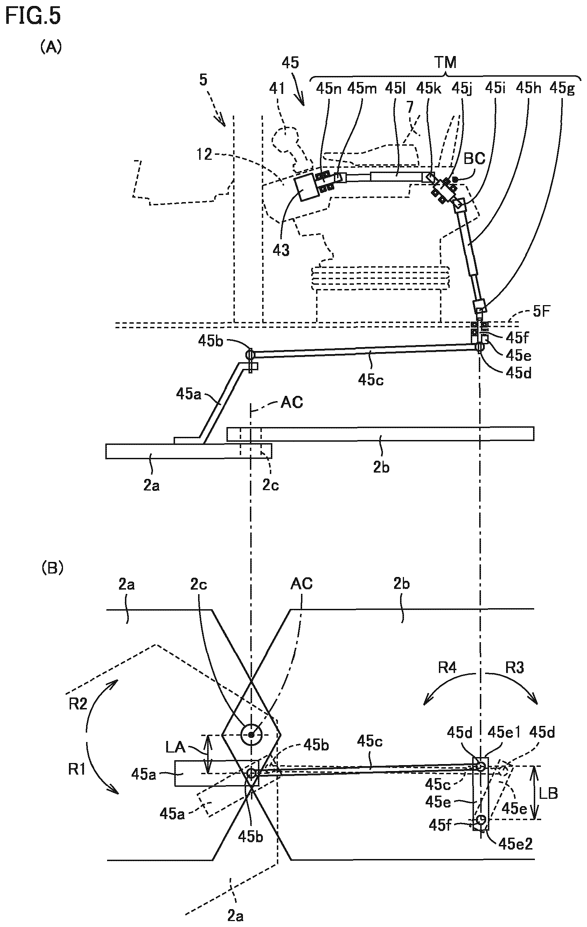

Fig. 4 is a perspective view showing a construction of the transmission mechanism that transmits information on actual vehicular body frame angle θs_real to the base member of the lever unit. Fig. 5 is a side view (A) and a top view (B) showing the construction of the transmission mechanism shown in Fig. 4.

As shown in Fig. 4, transmission mechanism 45 transmits information on actual vehicular body frame angle θs_real to base member 43 and has base member 43 pivot to a position corresponding to actual vehicular body frame angle θs_real.

Transmission mechanism 45 is a mechanism including a link. Transmission mechanism 45 includes a rotation shaft 45b, a rod 45c, a connection portion 45d, a link member 45e, a rotation shaft 45f, and a transmission member TM.

A bracket 45a is attached to front frame 2a, for example, with a bolt or the like. A position of bracket 45a with respect to front frame 2a is fixed. Bracket 45a rises upward from an upper surface of front frame 2a.

Rod 45c is a push and pull rod. Rod 45c is connected to bracket 45a with rotation shaft 45b being interposed. Rod 45c is thus pivotably connected to bracket 45a. Rotation shaft 45b extends, for example, in the upward/downward direction. Rod 45c is thus pivotable with respect to front frame 2a, for example, in a plane extending in the fore/aft and lateral directions.

Link member 45e is formed, for example, from a flat plate or the like. Link member 45e includes a first end 45e1 and a second end 45e2 opposed to each other in the longitudinal direction thereof. Link member 45e is connected to rod 45c at first end 45e1, with connection portion 45d being interposed. Connection portion 45d is formed, for example, from a ball joint. Link member 45e is thus pivotable with respect to rod 45c.

Link member 45e has rotation shaft 45f at second end 45e2. Rotation shaft 45f extends upward from link member 45e. Rotation shaft 45f is attached and fixed to link member 45e and a position thereof with respect to link member 45e is fixed. Therefore, with rotation of link member 45e, rotation shaft 45f also rotates with link member 45e.

Transmission member TM transmits rotational force to base member 43 (Fig. 3) while a direction of rotation of rotation shaft 45f in rotation of link member 45e is maintained. Transmission member TM includes a first shaft 45h, a pivot portion 45j, a second shaft 45l, base member shaft 45n, and universal joints 45g, 45i, 45k, and 45m.

First shaft 45h is connected to second end 45e2 of link member 45e, with rotation shaft 45f and universal joint 45g being interposed. Universal joint 45g is connected between rotation shaft 45f and first shaft 45h. First shaft 45h is thus pivotable together with rotation shaft 45f, and an angle of joint between first shaft 45h and rotation shaft 45f is variable. First shaft 45h is, for example, in a telescopic structure. First shaft 45h is thus extendible and contractable in an axial direction.

Pivot portion 45j is connected to first shaft 45h with universal joint 45i being interposed. Pivot portion 45j is thus pivotable together with first shaft 45h, and an angle of joint between pivot portion 45j and first shaft 45h is variable.

Second shaft 45l is connected to pivot portion 45j with universal joint 45k being interposed. Second shaft 45l is thus pivotable together with pivot portion 45j, and an angle of joint between pivot portion 45j and second shaft 45l is variable. Second shaft 45l is, for example, in a telescopic structure. Second shaft 45l is thus extendible and contractable in the axial direction.

Base member shaft 45n is connected to second shaft 45l with universal joint 45m being interposed. Base member shaft 45n is thus pivotable together with second shaft 45l, and an angle of joint between second shaft 45l and base member shaft 45n is variable. Base member shaft 45n is fixed to base member 43. Base member 43 thus rotates together with base member shaft 45n.

As shown in Fig. 5 (A), transmission mechanism 45 includes a portion arranged on the outside of cab 5 and a portion arranged in the inside of cab 5. Rotation shaft 45b, rod 45c, connection portion 45d, and link member 45e of transmission mechanism 45 are arranged on the outside of cab 5 and below cab 5.

Rotation shaft 45f is arranged across both of the outside and the inside of cab 5. Rotation shaft 45f is inserted in a through hole in a floor 5F of cab 5. Rotation shaft 45f is attached to floor 5F of cab 5 with a bearing being interposed. Rotation shaft 45f is thus pivotable with respect to floor 5F of cab 5.

Transmission member TM of transmission mechanism 45 is arranged in the inside of cab 5. Universal joint 45g of transmission mechanism 45 is connected to an end (upper end) of rotation shaft 45f located in the inside of cab 5. Universal joint 45k, second shaft 45l, universal joint 45m, and base member shaft 45n of transmission mechanism 45 are arranged in the inside of console box 12.

Console box 12 is pivotable around a shaft BC. Console box 12 thus pivots between an operation state in which the operator operates the control lever and a lifted state in which the console box is lifted.

As shown in Fig. 5 (B), in a top view, a first direction in which front frame 2a rotates with respect to rear frame 2b by articulation is reverse to a second direction in which link member 45e rotates around rotation shaft 45f. When front frame 2a rotates with respect to rear frame 2b, for example, counterclockwise R1 around coupling shaft 2c in the top view, link member 45e rotates around rotation shaft 45f clockwise R3. When front frame 2a rotates with respect to rear frame 2b, for example, clockwise R2 around coupling shaft 2c in the top view, link member 45e rotates counterclockwise R4 around rotation shaft 45f.

In the top view, rotation shaft 45f is located opposite to an articulation center AC of rear frame 2b and front frame 2a, with respect to rod 45c. Articulation center AC means a shaft center of coupling shaft 2c. In the present embodiment, rotation shaft 45f is located on the left (a lower side in Fig. 5 (B)) of rod 45c and articulation center AC is located on the right (an upper side in Fig. 5 (B)) of rod 45c.

In the top view, a distance LB from connection portion 45d between rod 45c and link member 45e to rotation shaft 45f is longer than a distance LA from articulation center AC to a portion of connection (rotation shaft 45b) between rod 45c and front frame 2a (bracket 45a).

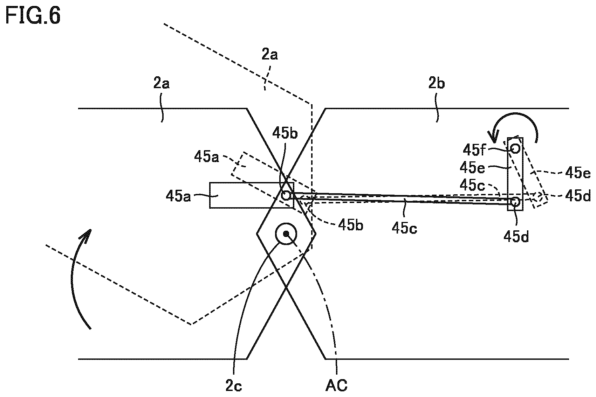

Though an example in which bracket 45a is arranged on the left of articulation center AC in the top view is described with reference to Fig. 5 (B), as shown in Fig. 6, bracket 45a may be arranged on the right of articulation center AC in the top view. In the construction shown in Fig. 6, rotation shaft 45f is located on the right side (the upper side in Fig. 6) of rod 45c and articulation center AC is located on the left (the lower side in Fig. 6) of rod 45c.

As described above, transmission member TM transmits rotational force to base member 43 (Fig. 3) while the direction of rotation of rotation shaft 45f in rotation of link member 45e is maintained. The "direction of rotation" means the direction of rotation when an end from which rotational force is transmitted (a transmission source) is viewed from an end to which rotational force is transmitted (a transmission target) in a member that rotates.

For example, in the state shown in Fig. 5 (B), when front frame 2a pivots to the left (counterclockwise R1) with respect to rear frame 2b and link member 45e pivots clockwise R3 in the top view, first shaft 45h also pivots clockwise in the top view and second shaft 45l and base member shaft 45n also pivot clockwise in a front view. Base member 43 thus also pivots clockwise (to the left in Fig. 3) in the front view.

Alternatively, for example, in the state shown in Fig. 5 (B), when front frame 2a pivots to the right (clockwise R2) with respect to rear frame 2b and link member 45e pivots counterclockwise R3 in the top view, first shaft 45h also pivots counterclockwise in the top view and second shaft 45l and base member shaft 45n also pivot counterclockwise in the front view. Base member 43 thus also pivots counterclockwise (to the right in Fig. 3) in the front view.

The "top view" above means a point of view downward from above wheel loader 1. The "front view" above means a point of view rearward from the front of wheel loader 1.

### <Operation to Control Wheel Loader 1>

An operation to control wheel loader 1 in the present embodiment will now be described.

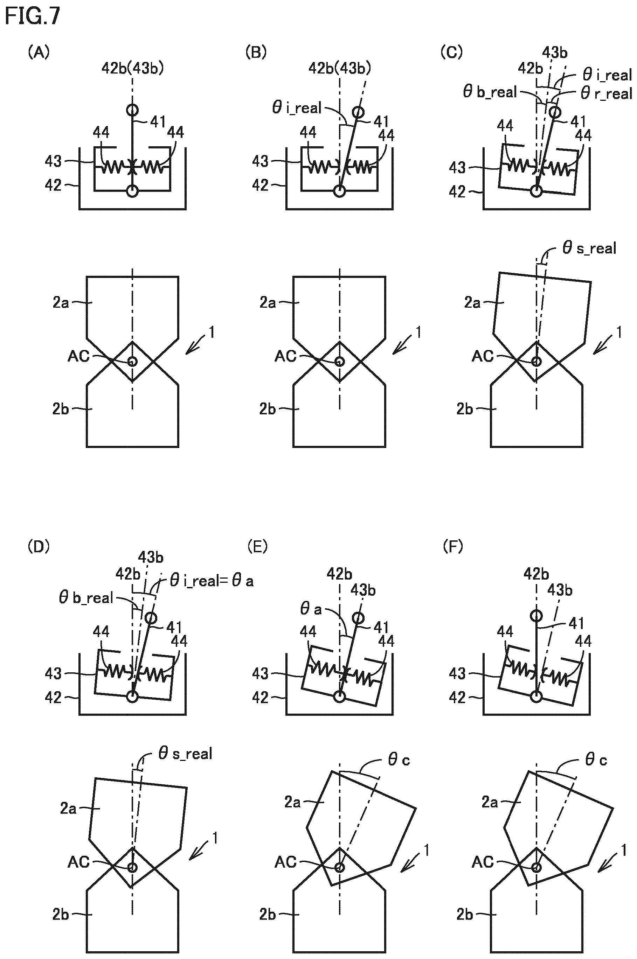

Fig. 7 (A) to (F) is a diagram showing an operation of the steering apparatus and a state of the vehicular body frame.

As shown in Fig. 7 (A), base reference position 43b of base member 43 coincides with support reference position 42b of support portion 42. The longitudinal direction of control lever 41 also coincides with support reference position 42b.

As shown in Fig. 3, in this state (which is also referred to as an initial position), actual lever angle θi_real set by control lever 41 is zero. At this time, electromagnetic pilot valve 33 is in a state of the neutral position. Hydraulic valve 31 is also at the neutral position. Therefore, oil is not supplied to or drained from left and right steering cylinders 11a and 11b, and actual vehicular body frame angle θs_real is maintained at zero. Since actual vehicular body frame angle θs_real is thus also zero, base member 43 is also located at the initial position.

The operator then applies operational force, for example, to rotate control lever 41 from support reference position 42b to the right. When this operational force exceeds initial biasing force from biasing member 44, as shown in Fig. 7 (B), control lever 41 rotates to the right and actual lever angle θi_real increases. As the control lever is moved to the right, angle θr_real relative to base member 43 increases and hence reaction force applied to control lever 41 by biasing member 44 becomes greater.

Lever angle sensor 46 (Fig. 3) detects actual lever angle θi_real of control lever 41 operated by the operator, as lever angle detection value θi_detect. Vehicular body frame angle sensor 47 (Fig. 3) then detects actual vehicular body frame angle θs_real, as vehicular body frame angle detection value θs_detect.

At this time, due to delay in reaction of left and right steering cylinders 11a and 11b, actual vehicular body frame angle θs_real is in a state of zero. Therefore, vehicular body frame angle detection value θs_detect which is the detection value from vehicular body frame angle sensor 47 is zero. Since actual vehicular body frame angle θs_real is substantially zero, base member 43 does not pivot either. Therefore, while control lever 41 pivots to the right as shown in Fig. 7 (B), control lever 41 is in a state of pivot to the right with respect to base reference position 43b of base member 43. Biasing member 44 biases control lever 41 to return to base reference position 43b (which can also be said as support reference position 42b in the state in Fig. 7 (B)).

Controller 23 (Fig. 3) then determines electromagnetic pilot valve control current output i based on detection value θi_detect representing the detected lever angle, vehicular body frame angle detection value θs_detect, and detection signal V_detect from vehicle speed sensor 24. Controller 23 provides a command to electromagnetic pilot valve 33 based on determined electromagnetic pilot valve control current output i.

Since control lever 41 has been rotated to the right, electromagnetic pilot valve 33 takes the right pilot position and the pilot pressure controlled by electromagnetic pilot valve 33 is supplied to hydraulic valve 31. As the pilot pressure is supplied, hydraulic valve 31 takes the right steering position and a main hydraulic pressure is supplied to steering cylinders 11a and 11b such that steering cylinder 11a extends and steering cylinder 11b contracts.

Actual vehicular body frame angle θs_real thus gradually increases and front frame 2a pivots to the right with respect to rear frame 2b. This in actual vehicular body frame angle θs_real is reflected on the angle of base member 43 through transmission mechanism 45.

Specifically, as shown in Fig. 7 (C), base member 43 also pivots to a position corresponding to vehicular body frame angle θs_real. When base member 43 thus pivots toward a position of pivot of control lever 41, an angle difference θr_real between actual lever angle θi_real and actual base angle θb_real becomes smaller and hence biasing force from biasing member 44 becomes weaker.

As shown in Fig. 7 (D), when the operator stops control lever 41 at a prescribed actual lever angle θi_real = θa, a differential angle θdiff becomes smaller because actual vehicular body frame angle θs_real gradually increases.

Then as shown in Fig. 7 (E), when actual vehicular body frame angle θs_real varies and base angle θb_real attains to θa, differential angle θdiff attains to zero. At this time, electromagnetic pilot valve 33 takes the neutral position and hydraulic valve 31 is also at the neutral position. Therefore, oil is not supplied to or drained from left and right steering cylinders 11a and 11b. Since base angle θb_real is in proportional relation with vehicular body frame angle θs_real, actual vehicular body frame angle θs_real is maintained at θc which results from conversion of an angle of rotation θa based on this proportional relation. As shown in Fig. 7 (E), base member 43 also pivots to the right by θa with respect to support portion 42 and control lever 41 is located at base reference position 43b of base member 43.

The operator then moves control lever 41 back from a right position (θi_real = θa) to support reference position 42b (θi_real = zero). As shown in Fig. 7 (F), control lever 41 is rotated to the left to be located at support reference position 42b.

Before control lever 41 is moved back to support reference position 42b with respect to support portion 42 (the state shown in Fig. 7 (E)), positional relation between control lever 41 and base member 43 is the same as in Fig. 7 (A). Therefore, in moving control lever 41, reaction force at the time of start of movement is the same as that at the time of start of movement from the initial position. In other words, since base member 43 pivots to a position corresponding to actual vehicular body frame angle θs_real in the present embodiment, reaction force provided to the operation is determined in correspondence with the state (an intermediate position, the right pilot position, and the left pilot position) of electromagnetic pilot valve 33, regardless of the position of control lever 41.

When control lever 41 is rotated to the left to be located at support reference position 42b, actual vehicular body frame angle θs_real is in a state of θc due to delay in reaction of left and right steering cylinders 11a and 11b. Since actual base angle θb_real has attained to θa similarly to actual vehicular body frame angle θs_real, biasing member 44 biases control lever 41 toward base member 43 to achieve the state in Fig. 7 (F).

Since actual vehicular body frame angle θs_real in the state of θc as above, differential angle θdiff decreases from zero and attains to a negative value. Electromagnetic pilot valve 33 then takes the left pilot position, the pilot pressure is supplied to hydraulic valve 31, and hydraulic valve 31 takes the left steering position. The hydraulic pressure is thus supplied such that steering cylinder 11b extends and steering cylinder 11a contracts.

With this supply of the hydraulic pressure, actual vehicular body frame angle θs_real gradually decreases from an angle of rotation θc. This in actual vehicular body frame angle θs_real is reflected on base member 43 through transmission mechanism 45, and base member 43 also pivots similarly to in actual vehicular body frame angle θs_real.

When actual vehicular body frame angle θs_real then attains to zero, the difference from actual lever angle θi_real (= 0) attains to zero. At this time, electromagnetic pilot valve 33 takes the neutral position and hydraulic valve 31 is also at the neutral position. Therefore, oil is not supplied to or drained from left and right steering cylinders 11a and 11b and actual vehicular body frame angle θs_real also returns to and is maintained at zero. Front frame 2a thus returns to an orientation along the fore/aft direction with respect to rear frame 2b.

Base member 43 pivots such that actual base angle θb_real also attains to zero with decrease in actual vehicular body frame angle θs_real, and returns to the initial position (θb_real = 0) as shown in Fig. 7 (A).

Rotation of control lever 41 to the left is similar to the above, and hence is not mentioned.

### <Effects>

Effects of the present embodiment will now be described.

In the present embodiment, as shown in Fig. 5 (B), in the top view, the direction of rotation of front frame 2a with respect to rear frame 2b by articulation is reverse to the direction of rotation of link member 45e around rotation shaft 45f. Transmission member TM transmits rotational force to base member 43 while the direction of rotation of rotation shaft 45f is maintained. Therefore, without the reversing gear that reverses the direction of pivot, base member 43 can rotate around shaft 43a in the direction the same as the direction of pivot of front frame 2a. Therefore, increase in play at the neutral position of the control lever due to backlash originating from the reversing gear can be prevented and the operation of wheel loader 1 is facilitated.

Since the reversing gear is not necessary, increase in weight, increase in cost, and increase in footprint due to addition of the reversing gear and the bearing that supports the reversing gear can be prevented.

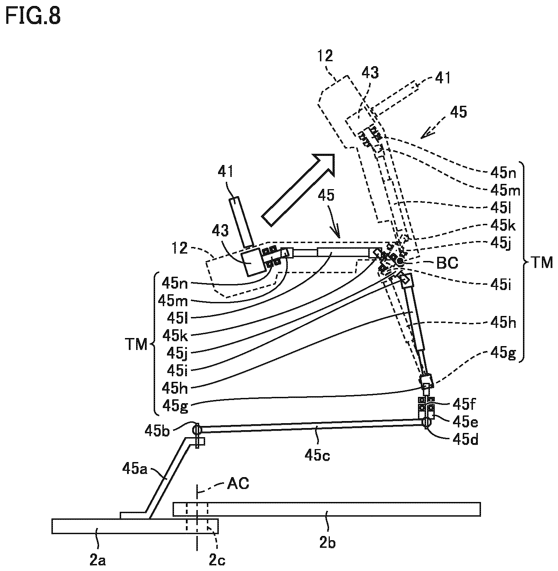

The reversing gear is large and heavy. Therefore, in an example where the reversing gear is provided, accommodation of the reversing gear leads to increase in size and also in weight of console box 12, and it becomes difficult to lift console box 12 as shown in Fig. 8. In the present embodiment, however, the reversing gear is not necessary and console box 12 is also readily lifted.

In the present embodiment, as shown in Fig. 5 (B), in the top view, rotation shaft 45f is located opposite to articulation center AC with respect to rod 45c. With such arrangement of each member, in the top view as above, the direction of rotation of front frame 2a with respect to rear frame 2b by articulation can be reverse to the direction of rotation of link member 45e around rotation shaft 45f.

Front frame 2a pivots to the left and right approximately by 40° with respect to rear frame 2b. Pivot of base member 43 to the left and right approximately by 40° similarly to front frame 2a would be out of a range of twist within which use with human's arm is comfortable.

In this connection, in the present embodiment, as shown in Fig. 5 (B), in the top view, distance LB from connection portion 45d between rod 45c and link member 45e to rotation shaft 45f is set to be longer than distance LA from articulation center AC to connection portion 45d between rod 45c and front frame 2a. Thus, without separately providing a link ratio adjustment gear, the link ratio can be adjusted. Therefore, the pivot angle of base member 43 can be smaller than the pivot angle of front frame 2a, and the operator can comfortably operate control lever 41.

In the present embodiment, as shown in Fig. 5 (B), each of first shaft 45h and second shaft 45l is extendible and contractable. In transmission member TM, first shaft 45h and pivot portion 45j are connected to each other by universal joint 45i and second shaft 45l and pivot portion 45j are connected to each other by universal joint 45k. Thus, as shown in Fig. 8, a degree of freedom in transformation of transmission mechanism 45 around pivot portion 45j is higher, and console box 12 is readily lifted. By lifting console box 12, a wide aisle where the operator moves in cab 5 can be secured.

In the present embodiment, as shown in Fig. 8, a pivot center BC of console box 12 in lifting console box 12 is arranged near pivot portion 45j and universal joints 45i and 45k. Therefore, change in length of first shaft 45h and second shaft 45l in an example where first shaft 45h and second shaft 45l are in the telescopic structure can be suppressed within a certain range.

In the present embodiment, as shown in Fig. 5 (A), first shaft 45h and rotation shaft 45f are connected to each other by universal joint 45g and second shaft 45l and base member 43 are connected to each other by universal joint 45m. Rotational force can thus be transmitted to base member 43 while the direction of rotation is maintained.

In the present embodiment, as shown in Fig. 5 (A), each of first shaft 45h and second shaft 45l is extendible and contractable. Therefore, motion of a seat suspension of operator's seat 7 can be absorbed. Since each of first shaft 45h and second shaft 45l is extendible and contractable, slide adjustment in the fore/aft direction of console box 12 can also be made. Each of first shaft 45h and second shaft 45l may have a pantograph-type rotation transmission mechanism, rather than a telescopic rotation transmission mechanism.

In the present embodiment, as shown in Fig. 5 (A), connection portion 45d is formed, for example, from a ball joint. Therefore, even when cab 5 semi-fixed to vehicular body frame 2 by viscous mount slightly moves, vibration of cab 5 can be absorbed.

In the present embodiment, as shown in Fig. 8, while console box 12 is being used, second shaft 45l is connected to first shaft 45h at the rear end with universal joints 45i and 45k and the like being interposed, and connected to base member 43 at the front end with universal joint 45m and the like being interposed. Console box 12 can thus be lifted, with a rear end side of second shaft 45l being defined as an origin. Therefore, a wide aisle can be secured in front of operator's seat 7 and passage is facilitated.

It should be understood that the embodiment disclosed herein is illustrative and non-restrictive in every respect. The scope of the present invention is defined by the terms of the claims rather than the description above and is intended to include any modifications within the scope and meaning equivalent to the terms of the claims.

### REFERENCE SIGNS LIST

1 wheel loader; 2 vehicular body frame; 2a front frame; 2b rear frame; 2c coupling shaft; 3 work implement; 4 travel apparatus; 4a, 4b running wheel; 5 cab; 5F floor; 6 bucket; 7 operator's seat; 9 boom pin; 11a, 11b steering cylinder; 10 steering system; 12 console box; 12f frame; 13 armrest; 14 boom; 15 link; 16 boom cylinder; 17 bucket pin; 18 bell crank; 18a support pin; 18b, 18c coupling pin; 19 bucket cylinder; 21 regulation mechanism; 22 steering apparatus; 23 controller; 24 vehicle speed sensor; 25 lever unit; 31 hydraulic valve; 32 main pump; 33 electromagnetic pilot valve; 34 pilot pump; 41 control lever; 42 support portion; 43 base member; 43a shaft; 44 biasing member; 45 transmission mechanism; 45a bracket; 45b, 45f rotation shaft; 45c rod; 45d connection portion; 45e link member; 45e1 first end; 45e2 second end; 45g, 45i, 45k, 45m universal joint; 45h first shaft; 45j pivot portion; 45l second shaft; 45n base member shaft; 46 lever angle sensor; 47 vehicular body frame angle sensor; 48 restriction portion; 49, 481, 482 abutment part; 491, 492 abutment portion; AC articulation center; BC pivot center; TM transmission member.

## Claims

1. A steering apparatus of a work vehicle including a rear frame and a front frame connected as being articulated with respect to the rear frame, the steering apparatus comprising:
a lever unit including a base member;
a rod pivotably connected to the front frame;
a link member having a first end and a second end, the link member being pivotably connected to the rod at the first end, the link member having a rotation shaft at the second end; and
a transmission member that transmits rotational force to the base member while a direction of rotation of the rotation shaft in rotation of the link member is maintained, wherein
the link member is configured to rotate, when the front frame rotates in a first direction by articulation with respect to the rear frame in a top view, in a second direction around the rotation shaft, the second direction being a direction reverse to the first direction.

2. The steering apparatus according to claim 1, wherein
in the top view, the rotation shaft is located opposite to an articulation center of the rear frame and the front frame, with respect to the rod.

3. The steering apparatus according to claim 1, wherein
in the top view, a distance from a portion of connection between the rod and the link member to the rotation shaft is longer than a distance from an articulation center of the rear frame and the front frame to a portion of connection between the rod and the front frame.

4. The steering apparatus according to any one of claims 1 to 3, wherein
the transmission member includes a first shaft, a pivot portion, and a second shaft,
the first shaft and the second shaft are extendible and contractable, and
the first shaft and the pivot portion are connected to each other by a first universal joint and the second shaft and the pivot portion are connected to each other by a second universal joint.

5. The steering apparatus according to claim 4, wherein
the first shaft and the rotation shaft are connected to each other by a third universal joint and the second shaft and the base member are connected to each other by a fourth universal joint.

6. A work vehicle comprising:
a rear frame;
a front frame connected as being articulated with respect to the rear frame;
a lever unit including a base member;
a rod pivotably connected to the front frame;
a link member having a first end and a second end, the link member being pivotably connected to the rod at the first end, the link member having a rotation shaft at the second end; and
a transmission member that transmits rotational force to the base member while a direction of rotation of the rotation shaft in rotation of the link member is maintained, wherein
the link member is configured to rotate, when the front frame rotates in a first direction by articulation with respect to the rear frame in a top view, in a second direction around the rotation shaft, the second direction being a direction reverse to the first direction.
